# EUROPEAN PATENT SPECIFICATION

(11) **EP 2 828 207 B1**
(45) Date of publication and mention of the grant of the patent: **26.12.2018**
(21) Application number: 13704953.2
(22) Date of filing: 19.02.2013
(51) Int. Cl.: C02F 1/68, C02F 1/00, A47J 31/40

(54) **SOLID DIETARY SUPPLEMENT DOSING DEVICE, GRAVITY FED WATER PURIFIER INCORPORATING SAID DOSING DEVICE AND DISPENSING METHOD**
DOSIERVORRICHTUNG FÜR FESTE LEBENSMITTELERGÄNZUNGEN, MITTELS SCHWERKRAFT GESPEISTER WASSERAUFBEREITER ENTHANLTEND DIE DOSIERVORRICHTUNG UND DOSIERVERFAHREN
DISPOSITIF DE DOSAGE DE SUPPLÉMENT ALIMENTAIRE SOLIDE, PURIFICATEUR D'EAU ALIMENTÉ PAR GRAVITÉ COMPRENANT LEDIT DISPOSITIF ET PROCÉDÉ DE DOSAGE

(30) Priority: 21.03.2012 IN 747MU2012; 15.05.2012 EP 12168115
(43) Date of publication of application: 28.01.2015
(73) Proprietor: Unilever N.V., 3013 AL Rotterdam (NL); Unilever PLC, London, Greater London EC4Y 0DY (GB)
(72) Inventor: GOPALKRISHNA, Girish, Shanka, Whitefield 560 066 Bangalore (IN); DAGAONKAR, Manoj, Vilas, Whitefield 560 066 Bangalore (IN); KUMARAN, Vetri, Whitefield 560 066 Bangalore (IN)
(74) Representative: Reijns, Tiemen Geert Pieter
(86) International application number: PCT/EP2013/053253
(87) International publication number: WO 2013/139548

(56) References cited:
- WO-A1-00/35569
- WO-A1-03/052209
- US-A1- 2010 108 581
- US-A1- 2011 163 124

## Description

### TECHNICAL FIELD

The present invention relates to a dietary supplement dosing device that can be connected to a source of water to enable fortification of water at the time of dispensing. The present invention particularly relates to connecting the dietary supplement dosing device to a water purification device to consistently provide potable water having beneficial amounts of dietary supplement.

The invention has been developed primarily for use in drinking water application and will be described hereinafter with reference to this application. However, it will be appreciated that the invention is not limited to this particular field of use.

### BACKGROUND AND PRIOR ART

Any discussion of the prior art throughout the specification should in no way be considered as an admission that such prior art is widely known or forms part of the common general knowledge in the field.

Having a balanced diet to get enough vitamins and minerals from daily diet is preferable over getting them from supplements. The daily dosage of vitamins and minerals is defined in terms of Recommended Dietary Allowance (RDA). When people do not eat or get a healthy diet every day, taking a nutrient supplement that contains the recommended daily allowances for vitamins and minerals becomes necessary. Taking dietary supplement is particularly useful for people who have been diagnosed of vitamin or mineral deficiency. Common deficiencies that people may develop include deficiencies of Vitamin A, folic acid, Vitamin B12, Vitamin C, Vitamin D, iron, calcium, magnesium, phosphorus, potassium, sodium, and zinc.

Iron and various other minerals are not always easily absorbed by the body. Hence, the salts of vitamins and minerals need to be chosen based on their enhanced bio-availability.

Water is a crucial constituent of daily diet and water constitutes approximately 70 percent of the body weight. On an average an adult human being consumes about 1 to 3 litres of water per day and thus providing vitamins and minerals by fortifying water is useful.

A large population of people in the world live in countries where there is a severe shortage of hygienic potable water. People have to depend directly on ground water sources like wells, ponds and rivers. Various types of water purification devices that are based on radiation based disinfection, membrane based filtration devices and others like inline and gravity fed devices are also available where it is possible to achieve 6 log removal of bacteria, 4 log removal of virus and 3 log removal of cysts using filtration in combination with biocidal action.

In many parts of the world there is shortage of electricity and water and hence the gravity fed water purifiers which do not require the use of electricity and running water supply have become very popular. Providing known amounts of vitamins and minerals by fortifying water is very useful and hence designing dietary supplement dosing devices which can be incorporated into the gravity fed water purifiers would be highly beneficial. In doing so, the user will not only get pure drinking water but also fortified water.

Fortifying water with a nutritional amount of vitamins and minerals may render the water with a disagreeable aftertaste, a change in colour of water and also impart an odour which might be objectionable. A person would always like to have a glass of water without these organoleptic negative characteristics. It is thus a challenge to design a device that purifies water and at the same time delivers the dietary supplement at a beneficial level without any organoleptic negatives.

There have been several attempts to provide water compositions fortified with vitamins and minerals while keeping in mind the need for making it free of objectionable colour, odour and taste.

US7670479 (Lund et al.) discloses an additive dispensing system connectable to a water filtration system that provides for selectively dispensing an amount of additive to filtered water. The application discloses an additive dispensing system having a reservoir for containing an additive, an additive outlet and housing for connecting the reservoir and additive outlet to the water filtration system. It is essential that the additive dispensing system is ultrahydrophobic, ultralyophobic, or ultraclean, wherein the ultrahydrophobic, ultralyophobic, or ultraclean surface comprises a bubble structure made with a material with surface energy lower than 25 mN/m. For a better functioning of this device a pump is provided to dispense the additive into water. This application discloses dispensing of the additive to the filtered water in liquid form. This application does not disclose a dietary supplement dosing device for delivering controlled amounts of dietary supplement from a source of solid dietary supplements into the filtered water without the requirement of any external energy.

By having the dietary supplement dosing device attached to the outlet of a source of water it is possible to dose the dietary supplement as and when the water is dispensed. This ensures that right amount of dietary supplement is dispensed into the water which is dependent on the volume of water dispensed and also the duration for which the fortified water is stored is minimal. It is possible to dispense quantities of water that one desires to consume and that volume can be appropriately fortified.

In our co-pending application 2863/MUM/2011 (published as WO2013/053627), there is disclosed an on tap water dietary supplement dispensing system wherein known amounts of dietary supplements in the liquid form can be dispensed into water without storing the fortified water. This device does not require any external energy like electric power. The problem of organoleptic negatives while fortifying water with vitamins and minerals was also addressed. This application does not address fortifying using vitamins and minerals from a source of dietary supplements in the solid form.

WO0035569A1 relates to a method for continuously treating water. According to this method, a constant dose of a chemically reactive substance is added to the raw water which flows into the process through a channel and is mixed in a flow. The resulting solution of the mixture is steadily guided further as the chemical reaction takes place and poorly soluble constituents are separated from the water. The treated water is continuously delivered for retreatment or use. The aim of the invention is to provide a simple means for producing water of a high quality in a small space. To this end, the inventive method is configured in such a way that the chemical substance is continuously metered into a directed, non-circulating, turbulent flow of raw water which leads into a mixing pipe and is then conveyed as a premixture into a spatially defined, delimited mixing area of a reaction vessel via the mixing pipe, said reaction vessel being configured as a mixing reactor. Part of the premixture is drawn into a floor area of the mixing reactor with a reduced cross section, re-mixed intensively in a chamber which is delimited by the reaction vessel and returned to the mixing area of the mixing reactor via a pressure pipe.

Providing the dietary supplement in a liquid form may increase the weight of the material during transport and storage or may spill during consumer handling.

The present inventors have been able to solve these problems by providing the dietary supplement in the solid form. In using a solid dietary supplement the chances of microbial contamination is avoided significantly and the weight of the device is considerably reduced. The present inventors have been able to design a device that ensures the right amount of dietary supplement is dispensed into the water from a source of solid dietary supplement while the water is being dispensed. The device is further capable of providing beneficial amounts of dietary supplement by an economical and convenient way and without imparting organoleptic negatives such as colour, taste or odour and reducing the time for which the fortified water is stored before consumption.

### OBJECTS OF THE INVENTION

It is an object of the present invention to provide a dietary supplement dosing device capable of releasing predetermined amounts of dietary supplement to fortify water from a source of dietary supplement in the solid form.

It is another object of the present invention to provide a dietary supplement dosing device that can fortify water upon being dispensed for consumption.

It is yet another object of the present invention to provide fortified water free of colour, taste and odour and with beneficial amounts of dietary supplement.

It is yet another object of the present invention to provide a dietary supplement dosing device to be fitted to the faucet of a gravity fed water purification device.

### SUMMARY OF THE INVENTION

According to the present invention there is disclosed a dietary supplement dosing device comprising:
(i) a dietary supplement cartridge (11) comprising an inlet (20) for feed water, an outlet (22) for fortified water, a container (12) comprising at least one water leachable dietary supplement in a solid form (15) resting on a base (13) having at least one port (18) for passage of feed water and a closed top end (14);
(ii) said dietary supplement cartridge (11) is connected to a chamber (1) comprising at least two compartments separated by a weir (2);
(iii) a first compartment (4) comprising an inlet port (6) in fluid communication with a source of feed water where said first compartment (4) is connected to the inlet (20) of the dietary supplement cartridge (11);
(iv) a second compartment (5) comprising an outlet port (10) for dispensing fortified water and said second compartment (5) is connected to the outlet (22) of the dietary supplement cartridge (11); and,
wherein base of the first compartment is non-horizontal (7) and wherein the weir (2) comprises a notch (3).

The features and advantages of the invention will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples, embodiment and figures given in the description below are intended to clarify the invention and are not intended to limit the invention to those examples per se. Similarly, all percentages are weight/weight percentages unless otherwise indicated.

Except in the operating and comparative examples, or where otherwise explicitly indicated, all numbers in this description and claims indicating amounts of material or conditions of reaction, physical properties of materials and/or use are to be understood as modified by the word "about".

### DETAILED DESCRIPTION OF THE INVENTION

The present invention provides for a dietary supplement dosing device having a dietary supplement cartridge and a chamber and preferably having a flow control means.

### Dietary supplement cartridge

The dietary supplement dosing device has a dietary supplement cartridge. Dietary supplement cartridge includes an inlet, an outlet and a container comprising at least one dietary supplement in the solid form and preferably in the form of a tablet.

### Container:

The container includes a base, a closed top end, at least one dietary supplement in the solid form and preferably having a movable support and a resilient member.

The container may be of any shape, preferably cylindrical. The container includes a base and a closed top end. The base of the container has atleast one port for allowing the feed water to enter the container and contact the dietary supplement in the solid form through a pipe. The pipe is in fluid communication with the inlet of the dietary supplement cartridge.

The container includes at least one water leachable dietary supplement in the solid form, preferably a tablet that is resting on the base of the container. Preferably the container houses a plurality of stacked dietary supplement tablets. When a plurality of stacked dietary supplement tablets is present, the container may preferably have 1 to 10 dietary supplement tablets, more preferably 3 to 8 dietary supplement tablets and still more preferably 4 to 6 dietary supplement tablets in the container. Most preferably the container has 2 dietary supplement tablets.

Preferably the container has a movable support resting on the topmost dietary supplement tablet. The movable support is preferably a plate, a disc or a tablet shaped member and most preferably a tablet shaped member. The movable support is preferably brightly coloured e.g. in red, blue or green.

The movable support may preferably be attached to a mechanical auto-shut off mechanism that provides for closing the outlet or inlet of the dietary supplement cartridge when the dietary supplement tablets are exhausted and ensure that the water that is dispensed is always fortified.

The container preferably has a resilient member placed between the closed top end and the movable support. The resilient member may be a spring or a bellow. In use, when the dietary supplement tablets are consumed the resilient member provides additional force to ensure that the movable support descends towards the base of the container.

The container preferably includes at least one window positioned on the wall adjacent to the base of the container. The window is in fluid communication with the outlet of the dietary supplement cartridge.

### Dietary supplement:

The word dietary supplement is used throughout the text to basically refer to vitamin, mineral, electrolyte, flavour or a nutrient.

Dietary supplement is provided in the solid form and is preferably in the form of a tablet. The tablet is preferably circular, square, rectangular, hexagon or oval in shape. The leading cross sectional dimension is preferably from 1.0 cm to 5.0 cm, more preferably from 1.0 to 3.0 cm. The tablet preferably has a thickness in the range of 1.0 cm to 10.0 cm, more preferably 1.0 to 5.0 cm.

Preferably the composition of the dietary supplement tablet according to the invention may be selected from one or more of a vitamin, mineral, electrolyte, flavour or a nutrient or a mixture thereof. The dietary supplement may be sourced from either a chemical or natural source.

According to a highly preferred aspect of the present invention, a natural source of vitamin and mineral is *Phyllanthus emblica* (Amla) extract.

Amla primarily includes tannins, bioflavonoids, carotenoids, alkaloids, and phenolic compounds, amino acids and carbohydrates which have extraordinary longevity and rejuvenating properties. Synthetic vitamin C does not provide vital nutrients such as rutin and bioflavonoids. Amla is valued for its unique tannins and flavonoids, which exhibit very powerful antioxidant properties. Amla is considered as a more potent antioxidant than Vitamin C. Vitamin C in Amla accounts for ∼45-70 percent of the antioxidant activity. There are no RDA levels for Amla.

The present inventors have determined that it is beneficial to dose it in a range between 2 to 50 ppm and preferably between 5 and 10 ppm since at concentrations more than 10 ppm, the fortified water is likely to get slightly coloured. It is preferred that we dose the vitamins and minerals at 10-20% of the recommended daily allowance (RDA) per liter of water. The dosage of these fortifcants is selected such that it does not impart any negative organoleptic property to the water.

Water may also be fortified with Iron using the device of the invention. Iron compounds which may be dosed include a water-soluble iron compound, a water-dispersible particulate iron compound, or mixtures thereof. In addition, the iron compound of the present invention is preferably selected from a complexed iron compound, a chelated iron compound, an encapsulated iron compound, or mixtures thereof. Highly bioavailable iron compound is preferably chosen to provide maximum health benefits.

Iron-fortified water usually suffers from a metallic taste / aftertaste. The elimination of the metallic taste can be achieved by encapsulating the iron compound. The metallic taste can also be eliminated by binding the iron into a stable compound by complexing or chelating with a suitable ligand that does not permit the iron to be freely associated in water.

Preferred iron compound forms also include encapsulates and complexes that preferably have a dispersed particle size in the water that is small enough to be barely visible in solution. Preferably, the dispersed particle size is about 100 nanometers (nm) or less, and more preferably about 80 nm or less.

Ferrous iron is typically better utilized by the body than ferric iron. Ferrous amino acid chelates are particularly suitable as highly bioavailable forms when the ligand to metal ratio is at least 2:1. Highly bioavailable food grade ferrous salts that can be used in the present invention include ferrous sulphate, ferrous fumarate, ferrous succinate, ferrous gluconate, ferrous lactate, ferrous tartarate, ferrous citrate, ferrous amino acid chelates, as well as mixtures of these ferrous salts. Certain ferric salts can also provide a highly bioavailable source of iron. Highly bioavailable food grade ferric salts are ferric saccharate, ferric ammonium citrate, ferric citrate, ferric sulfate, ferric chloride, as well as mixtures of these ferric salts.

Other bio-available sources of iron particularly suitable for fortifying water of the present invention include certain iron-sugar-carboxylate complexes. In these iron-sugar-carboxylate complexes, the carboxylate provides the counter ion for the ferrous (preferred) or ferric iron.

The USRDA for iron generally ranges from 10 mg per 6 kg female or male to 18 mg per 54-58 kg female, depending somewhat on age.

The iron fortified water prepared using the device of the present invention typically contains at least about 1 ppm of iron compound, sufficient to deliver about 10% of USRDA of iron per litre of water to account for iron that is available from other dietary sources, assuming a reasonably balanced diet is available.

The water compositions of the present invention preferably may also contain nutrients, for example vitamin C, vitamin E, vitamin A, niacin, vitamin B6, vitamin B2, vitamin D2, vitamin B12, folate, zinc, electrolytes such as salts of sodium, potassium or magnesium and mixtures thereof.

The typical values for most healthy adults are generally: vitamin C (60 mg), vitamin A (2000 IU/day) vitamin B2 (1.7 mg), niacin (20 mg), vitamin B6 (2.0 mg), folic acid (0.2 mg/day), vitamin D2 (400 IU/day), vitamin B12 (0.001 mg/day) magnesium (300 mg), zinc (11 mg/day) and vitamin E (30 international units). The adequate intake value of sodium is generally 1.5 g and for potassium is generally 4.7 g.

Alternatively, commercially available sources of vitamin C may be used herein. Encapsulated ascorbic acid and edible salts of ascorbic acid may also be used. Commercially available vitamin A sources may also be incorporated into the water composition. Vitamin A can be provided, for example, as vitamin A palmitate (retinol palmitate), vitamin A acetate and/or as beta-carotene. It can be as an oil, as a beadlet or may be encapsulated. As used herein, "vitamin A" includes vitamin A, β-carotene, retinol palmitate and retinol acetate. Commercially available sources of vitamin B2 (riboflavin) can be used herein. Nutritionally supplemental amounts of other vitamins for incorporation into the water include, but are not limited to, vitamins B6 and B12, folate, niacin and vitamins D2 (ergocalciferol) and E. Preferred salt for vitamin B12 is 5,6 DNB cyanocobalamide and for folate is folic acid.

Sodium salts can be selected from sodium chloride, sodium ascorbate, sodium citrate, sodium ferric pyrophosphate, sodium gluconate, sodium phosphate, sodium pyrophosphate or mixtures thereof. Potassium salts can be selected from potassium chloride, potassium gluconate, potassium glycerophosphate, potassium iodide or mixtures thereof. Magnesium salts can be selected from magnesium gluconate, magnesium phosphate, magnesium sulfate or mixtures thereof. Zinc salts can be selected from zinc oxide, zinc gluconate, zinc sulfate or mixtures thereof.

Preferably, the water prepared using the device of the invention contains 10-20% of the USRDA or adequate intake value for these vitamins, minerals or electrolytes.
Other vitamins, minerals and electrolytes can also be incorporated into the water depending on the nutritional needs of the consumers to which the water product is directed.

The composition of the present invention may optionally include a sweetener. Such sweetening agents are added to the water to mask a metallic taste or after-taste caused by the minerals or vitamins. Suitable particulate sugars can be granulated or powdered, and can include sucrose, fructose, dextrose, maltose, corn maltodextrin, lactose and mixtures thereof. Most preferred is sucrose. Artificial sweeteners may also be used. Often gums, pectins and other thickeners are used with artificial sweeteners. Mixtures of sugars and artificial sweeteners may also be used.

The water can optionally include a flavouring agent. The flavouring agent may be of any natural or synthetically prepared fruit or botanical flavours or with mixtures of botanical flavours and fruit juice blends. Suitable natural or artificial fruit flavours include lemon, orange, grapefruit, strawberry, banana, pear, kiwi, grape, apple, mango, pineapple, passion fruit, raspberry and mixtures thereof. Suitable botanical flavours include Jamaica, marigold, chrysanthemum, tea, chamomile, ginger, valerian, yohimbe, hops, eriodictyon, ginseng, bilberry, rice, red wine, mango, peony, lemon lavender, walnut, gentiam, cinnamon, aloe, peppermint and mixtures thereof. When present the flavouring agent is present from about 0.01% to about 10%, preferably from about 0.02 % to 8 %. The actual amount of flavouring agent will depend on the type of flavouring agent used and the amount of flavour desired in the fortified water. Most preferred flavouring agent is peppermint flavour.

The tablet composition preferably includes a filler. Suitable fillers include sparingly soluble salts of calcium and magnesium, natural gums and polysachharides. Examples of fillers include starch, calcium chloride, calcium carbonate, gum arabic, gum ghatti, inulin, carboxy methyl cellulose, vinyl pyrollidone-vinyl acetate copolymers. The tablet composition preferably includes less than 95% fillers, more preferably less than 90% and still more preferably less than 85% fillers.

It is preferred that the tablet composition has a dietary supplement to filler ratio of 1:10 more preferably 1:8, further preferably 1:6 and most preferably 1:4.

### Chamber

The dietary supplement dosing device includes a chamber which is connected to the dietary supplement cartridge. The chamber includes at least two compartments separated by a weir. Preferably the weir separates the chamber into a first compartment and a second compartment.

### First compartment:

The first compartment of the chamber has a non-horizontal base. Preferably the base has an inclination of 25 to 45° more preferably from 35 to 40°. It is most preferred that the base has an inclination of 30°.

The first compartment has an inlet port for fluid communication with a source of feed water and is connectable to the inlet of the dietary supplement cartridge. Preferably a first opening is positioned above the point where the lower end of the slope of the non-horizontal base merges with the wall of the first compartment. The first opening is connected to the inlet of the dietary supplement cartridge to establish fluid communication between the first compartment and the dietary supplement cartridge. The fitment of the first opening with the inlet of the dietary supplement cartridge may be made by any standard fitment.

### Second compartment:

The second compartment of the chamber has an outlet port for dispensing the fortified water and is connectable to the outlet of the dietary supplement cartridge. Preferably a second opening is positioned adjacent to the first opening for connecting with the outlet of the dietary supplement cartridge to establish fluid communication between the dietary supplement cartridge and the second compartment. The fitment of the second opening with the outlet of the dietary supplement cartridge may be made by any standard fitment.

### Weir:

The first compartment and the second compartment of the chamber are separated by a weir.

The weir includes a notch. The notch cut into the weir may be of any shape for eg. U, V, W and most preferably the notch is V-shaped. It is preferred that a lowest point of the notch is not lower than the base of the container housing the dietary supplement tablet. Feed water in the first compartment rising above the lowest point of notch of the weir overflows through the notch into the second compartment.

### Flow rate of feed water

Preferably, the flow rate of feed water from the source entering the inlet port of the first compartment is in the range of 400 to 1200 ml/minute more preferably 600 to 800 ml/minute.

### Flow control means:

The dietary supplement dosing device preferably includes a flow control means. The flow control means regulates controlled flow of feed water from the source into the inlet port of the first compartment.

The flow control means is preferably selected from a float valve or a spring controlled valve.

When the flow control means is a float valve, it includes a float connected to a lever and a valve. The float connected to a lever detects the level of water and mechanically actuates a valve for control of the flow of water.

When the flow control means is a spring controlled valve, it includes a cone, an orifice and a spring arranged in mutually coaxial configuration. The spring controlled valve having the spring positioned in the stream of water is stretched or contracted depending on the flow rate of water causing the movement of a cone into an orifice. The spring, orifice and the cone are arranged in mutually coaxial configuration, to control the flow rate of water.

According to a second aspect, the present invention provides for a method of fortifying feed water using the dietary supplement dosing device according to the first aspect having the steps of delivering feed water at a controlled flow rate through the inlet port of the chamber into the first compartment; directing the feed water to flow towards the first opening by the non-horizontal base of the first compartment; allowing the feed water to flow through the inlet of the dietary supplement cartridge in fluid communication with the pipe; entering the port at the base of the container mounted on the rear of the pipe; dissolving a portion of the dietary supplement tablet to provide a dietary supplement solution; exiting the dietary supplement solution through the window on the container wall into the outlet of the dietary supplement cartridge; entering the dietary supplement solution through the second opening into the second compartment; allowing any water in the first compartment rising above the lowest point of the notch of the weir to flow into the second compartment to provide overflow water; collecting the overflow water in the second compartment; mixing of the dietary supplement solution released from the second opening and the overflow water in the second compartment to provide fortified water; dispensing the fortified water through the outlet port of the second compartment.

In a preferred method, the flow rate of the feed water is 400 to 1200 ml/minute, when in operation.

Preferably the ratio of the overflow water to the dietary supplement solution in the second compartment is 15:1 to 5:1, more preferably 12:1 to 7:1 and most preferably 9:1.

It is to be noted that the examples/figures given in the description below are intended to clarify the invention and are not intended to limit the invention to those embodiments per se.

### BRIEF DESCRIPTION OF THE DRAWINGS

Figure 1 is a side view of an embodiment of the chamber of the dietary supplement dosing device in accordance with the invention.
Figure 2 is a front view of an embodiment of the dietary supplement cartridge of the dietary supplement dosing device in accordance with the invention.
Figure 3 is sectional view of an embodiment of the dietary supplement dosing device connected to the faucet of a gravity fed water purification device in accordance with the invention having a float valve as the flow control means.
Figure 4 is sectional view of an embodiment of the dietary supplement dosing device connected to the faucet of a gravity fed water purification device in accordance with the invention having a spring controlled valve as the flow control means.

### DETAILED DESCRIPTION OF THE DRAWINGS

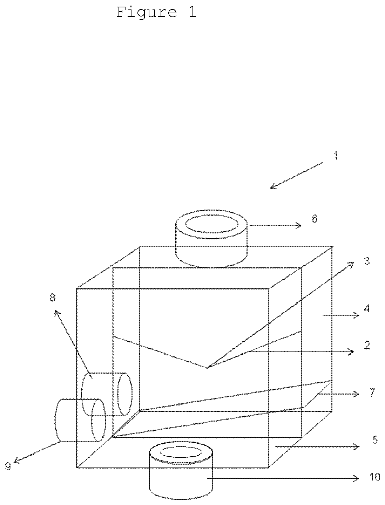

Figure 1 is a side view of an embodiment of the chamber (1) of the dietary supplement dosing device in accordance with the present invention. A weir (2) having a V-shaped notch (3) divides the chamber (1) into a first compartment (4) and a second compartment (5). Feed water from a source enters the first compartment (4) through an inlet port (6). The first compartment (4) has a non-horizontal base (7). A first opening (8) is positioned above the point where the lower end of the slope of the non-horizontal base (7) merges with the wall of the first compartment (4). The first opening (8) is connectable to the inlet of the dietary supplement cartridge (not shown in this view). A second opening (9) adjacent to the first opening (8) provided on the wall of the second compartment (5) is in fluid communication with the outlet of the dietary supplement cartridge (not shown in this view). An outlet port (10) provided in the second compartment (5) aids in dispensing the fortified water.

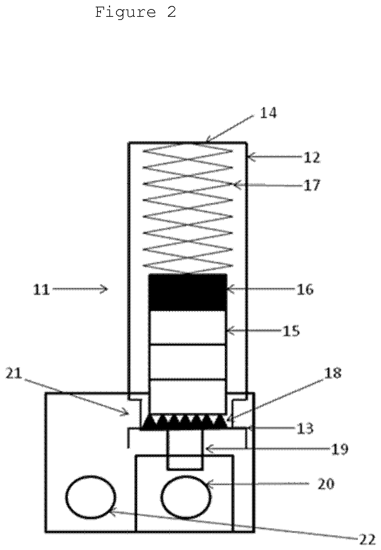

Figure 2 is a front view of a dietary supplement cartridge (11) in accordance with the invention. The dietary supplement cartridge (11) includes a container (12) which has a base (13) and a top closed end (14). Resting on the base (13) is at least one dietary supplement tablet (15). Above the topmost dietary supplement tablet rests a movable support (16). A resilient mechanism (17) is situated between the closed top end (14) and the movable support (16). The base of the container (13) has at least one port (18) for passage of feed water, mounted on the pipe (19). The pipe is in fluid communication with the inlet (20) of the dietary supplement cartridge.

The wall of the container adjacent its base (13) has at least one window (21) to allow flow of water from the container (12). The window (21) is in fluid communication with the outlet (22) of the dietary supplement cartridge.

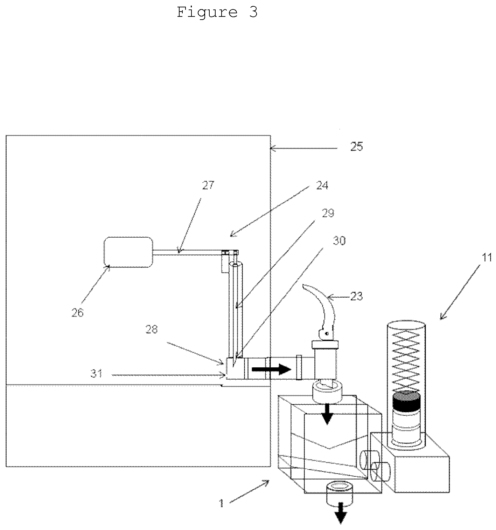

Figure 3 is a sectional view of an embodiment of the dietary supplement dosing device in accordance with the invention connected to the faucet (23) of a gravity fed water purification device having a float valve as the flow control means (24). The flow control means (24) situated inside the storage chamber (25) has a float (26), a lever (27) and a valve (28) having a needle (29) and two orifices (30 and 31). The needle (29) is placed perpendicular to the lever (27) and the tip of the needle moves inside the orifice (30) such that the orifice is either closed or partially opened depending upon the position of the float, which in turn depends on the level of water in the storage chamber (25). Hence the total area of the orifice available for flow of water increases with decreasing level of water in storage chamber. The other orifice (31) is always maintained in open condition. This configuration of the float valve ensures substantially constant flow rate of water irrespective of the head of water available in the water storage chamber. In this Figure the chamber (1) and the dietary supplement cartridge (11) are also shown.

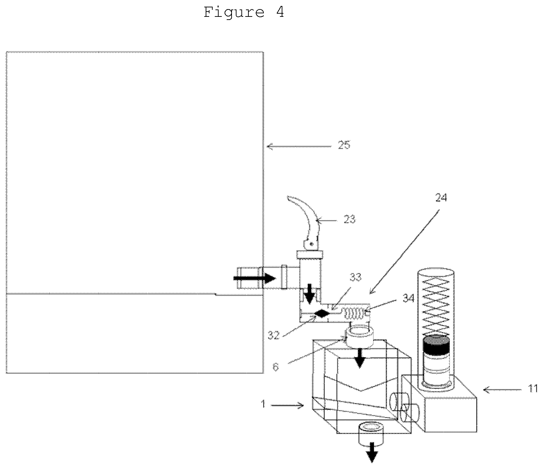

Figure 4 is sectional view of an embodiment of the dietary supplement dosing device in accordance with the invention connected to the faucet (23) of a gravity fed water purification device having a spring controlled valve as the flow control means (24). The spring controlled valve positioned after the faucet (23) and connected at one end to the faucet (23) and at other end to the inlet port (6) of the chamber (1) comprises of a cone (32), which moves inside a coaxially positioned orifice (33), whose movement is controlled by a spring (34). The effective open area of the orifice is controlled by the resultant force exerted as a result of two opposing forces (i) in the downstream direction by the kinetic energy of the water and (ii) the force on the cone exerted by the potential energy present in the spring in the opposite direction. The cone thus achieves a position in the orifice where the opening of the orifice has an inverse relationship to the height of water in the storage chamber, thus facilitating substantially constant flow rate of water through the differential pressure unit.

In use, in any of the embodiments of Figures 1 to 4, when faucet (23) of the gravity-fed water purification device is opened, water from the water storage chamber (25) flows out at a controlled flow rate through the flow control means (24) irrespective of water head in the storage chamber (25). Feed water from the faucet (23) enters into the inlet port (6) of the chamber (1). The inlet port (6) is in fluid communication with the first compartment (4) of the chamber (1). The non-horizontal base (7) of the first compartment (4) directs the feed water towards a first opening (8). The first opening (8) is connected to the inlet (20) of the dietary supplement cartridge (11). Feed water enters the dietary supplement cartridge through the inlet of the dietary supplement cartridge (20) which is in fluid communication with a pipe (19). Feed water rises through the pipe and enters the port (18) connected to the pipe (19). The feed water entering the port (18) provided on the base (13) of the container (12) contacts the bottom of the lowest dietary supplement tablet (15) resting on the base (13) and carries a known amount of the dietary supplement leached from the tablet (15) to provide a dietary supplement solution. The dietary supplement solution flows out of the container through a window (21) situated on the wall of the container adjacent to the base (13). The window is in fluid communication with the outlet (22) of the dietary supplement cartridge (11).

The dietary supplement solution flows out of the outlet (22) and enters the second compartment (5) through the second opening (9) adjacent to the first opening (8). As the feed water from the inlet port (6) fills the first compartment (4) the level of the water in the first compartment rises, the water rising above the bottom point of the notch (3) in the weir (2) overflows into the second compartment (5). The overflow water flows into the second compartment (5) without entering the dietary supplement cartridge (11). The overflow water in the second compartment (5) mixes with the dietary supplement solution entering the second compartment through the second opening (9) to provide a fortified water that exits the dietary supplement dosing device through the outlet port (10).

### EXAMPLES

### EXAMPLE 1

### Preparation of dietary supplement tablet:

Dietary supplements as shown in Table 1 were weighed and blended in a blender to prepare a dietary supplement mix. 80 g of filler (Kollidon VA 64 from BASF) was added to the dietary supplement mix such that a filler to dietary supplement ratio of 4:1 was maintained and mixed well. The resultant blend was pressed in a manually operated Hydraulic pellet press under a pressure of 30 kg/cm² to form a dietary supplement tablet. The average weight of the prepared dietary supplement tablet was 1.5 g.

**Table 1: Dietary supplement mix composition**

| Ingredient | Weight% |
|---|---|
| Vitamin A palmitate 250 CWS (source of Vitamin A) | 5 |
| 5,6 DMB cyanocobalamine (source of Vitamin B12) | 0.1 |
| Vitamin D2 (100) powder (source of Vitamin D2) | 2 |
| Folic acid (source of Vitamin B9) | 0.1 |
| Zinc sulfate (source of Zinc) | 13 |
| Kollidon VA 64 (Filler) | 80 |

### EXAMPLE 2

### Evaluation of the fortified water produced using comparative and the dietary supplement dosing device according to the invention:

The dietary supplement dosing device basically as shown in Figure 3 was used to test the efficacy of dosing of the dietary supplement. In (Ex 2) the features of the invention such as a non-horizontal base in the first compartment was maintained, where the non-horizontal base had an inclination of 30°, weir with a 'V' shaped notch and water was passed into the inlet port at an average flow rate of 560 ml/min. For determining the benefits of the essential features of the present invention, comparative devices were designed by modifying the device basically as in Figure 3 where in (Ex A) the non-horizontal base was removed and made horizontal while maintaining the notch in the weir; in (Ex B) the notch in the wier was eliminated by which the chamber had a first and a second compartment separated by rectangular shaped weir and the lowest point of the rectangular weir was at the same height as that of the lowest point of the V-shaped notch of Ex 2 and the base of the first compartment had an inclination of 30°and in (Ex C) the flow rate of water entering the inlet port was not controlled and varied depending on the water head but keeping other features of (Ex 2) unchanged. In Examples EX A and EX B the water entering the inlet port was at an average flow rate of 560 ml/min. The container of the dietary supplement cartridge was filled with two dietary supplement tablets having a composition as described in Table 1 and prepared as described in Example 1. 9 litres of water was passed through the devices. Water exiting the dietary supplement dosing device through the outlet port of the second compartment was collected in batches of 1 litre. A 10 ml sample of each of the 1litre batch collected was analysed by measuring its conductivity. The % RDA delivered by the fortified water was calculated using a calibration curve between dietary supplement dosage and conductivity of fortified water and is given in Table 2.

**Table 2: %RDA of fortified water delivered by preferred and comparative examples**

| % RDA dosing in 1 litre water | Ex A | Ex B | Ex C | Ex 2 |
|---|---|---|---|---|
| with a water head of 22 cm | 3 | 2 | 9 | 11 |
| with a water head of 20 cm | 1 | 1 | 0 | 12 |
| with a water head of 18 cm | 0 | 1 | 1 | 11 |
| with a water head of 16 cm | 2 | 1 | 0 | 10 |
| with a water head of 14 cm | 4 | 0 | 3 | 16 |
| with a water head of 11 cm | 9 | 1 | 3 | 14 |
| with a water head of 8 cm | 9 | 1 | 7 | 13 |
| with a water head of 5 cm | 7 | 1 | 8 | 12 |
| with a water head of 3 cm | 8 | 1 | 14 | 14 |
| Average % RDA | 5 | 1 | 5 | 13 |

It is clearly seen from the results provided in Table 2 that the fortified water dispensed through the dietary supplement dosing device according to the invention (Ex 2) consistently delivers a desired % RDA of the dietary supplements as compared to comparative dietary supplement dosing devices (Ex A, Ex B and Ex C).

### Example 3

### Effect of Head of water on flow rate and dosing of the Dietary Supplement:

Using the device as in Figure 3, the water in the storage chamber of the gravity fed water purification device was maintained at various levels as shown in Table 3 and the results for the flow rate of the water entering the inlet port of the chamber of the dietary supplement dosing device was also measured and the same are provided in Table 3. The device Ex C had no flow control means attached upstream the inlet port but otherwise was as per EX 2. Table 3 provides the variation in the flow rate of water at different heads.

**Table 3: Evaluation of flow rate of feed water delivered by preferred and comparative examples**

| Flow rate (ml/min) | Ex C | Ex 2 |
|---|---|---|
| with a water head of 22 cm | 3529 | 700 |
| with a water head of 20 cm | 3158 | 700 |
| with a water head of 18 cm | 2857 | 650 |
| with a water head of 16 cm | 2609 | 630 |
| with a water head of 14 cm | 2609 | 680 |
| with a water head of 11 cm | 2308 | 670 |
| with a water head of 8 cm | 1818 | 680 |
| with a water head of 5 cm | 1429 | 590 |
| with a water head of 3 cm | 1200 | 420 |
| Average flow rate | 2391 | 636 |

It is clearly seen from the results in Table 3 that presence of a flow control means provides for controlled flow rate of water delivered into the inlet port of the first compartment and thus providing consistent % RDA of the dietary supplement. The water obtained from the device according to the invention (Ex 2) had desirable organoleptic properties such as free of colour, odour and taste.

It should be understood that the specific forms of the invention herein illustrated and described are intended to be representative only as certain changes may be made therein without departing from the clear teachings of the disclosure.

Although the invention has been described with reference to specific embodiments, it will be appreciated by those skilled in the art that the invention may be embodied in many other forms.

The invention is defined by the appended claims.

## Claims

1. A dietary supplement dosing device comprising:
(i) a dietary supplement cartridge (11) comprising an inlet (20) for feed water, an outlet (22) for fortified water, a container (12) for comprising at least one water leachable dietary supplement in a solid form (15) resting on a base (13) having at least one port (18) for passage of feed water and a closed top end (14);
(ii) said dietary supplement cartridge (11) is connected to a chamber (1) comprising at least two compartments separated by a weir (2);
(iii) a first compartment (4) comprising an inlet port (6) in fluid communication with a source of feed water where said first compartment (4) is connected to the inlet (20) of the dietary supplement cartridge (11);
(iv) a second compartment (5) comprising an outlet port (10) for dispensing fortified water and said second compartment (5) is connected to the outlet (22) of the dietary supplement cartridge (11); and,
wherein base of the first compartment is non-horizontal (7) and wherein the weir (2) comprises a notch (3).

2. A dietary supplement dosing device as claimed in claim 1 wherein lowest point of the notch (3) is not lower than the base (13) of the container (12) for comprising the dietary supplement tablet (15).

3. A dietary supplement dosing device as claimed in any one of claims 1 or 2 wherein the non-horizontal base (7) of the first compartment (4) has an inclination of 10° to 50°.

4. A dietary supplement dosing device as claimed in any one of the preceding claims wherein the notch (3) is a V-shaped notch.

5. A dietary supplement dosing device as claimed in any one of the preceding claims, wherein the container (12) comprises at least one water leachable dietary supplement in a solid form (15) resting on the base (13).

6. A dietary supplement dosing device as claimed in claim 5 wherein the container (12) has a plurality of stacked dietary supplement tablet (15).

7. A dietary supplement dosing device as claimed in claim 5 or 6, wherein the dietary supplement is selected from a vitamin, mineral, electrolyte, flavour or nutrient.

8. A gravity fed water purification system comprising the dietary supplement dosing device as claimed in any one of the preceding claims wherein said device is connected to an outlet faucet (23) of a gravity fed water purification system comprising a filtration unit adapted to filter particulate material, and a chemical purifying unit containing a chemical purifying agent, in which the chemical purifying unit is housed in a sealed chamber and is in fluid communication with the filtration unit such that water treated by the filtration unit is then gravity fed into the chemical purifying unit and retained therein for a predetermined period, after which the water exits the system via a scavenger means which is adapted to recover leached chemical purifying agent.

9. A gravity fed water purification system according to claim 8 comprising a flow control means (24) positioned upstream the inlet port (6) and in fluid communication with said inlet port.

10. A gravity fed water purification system according to claim 9 wherein the flow control means (24) is selected from a float valve or a spring controlled valve.

11. A gravity fed water purification system according to claim 10 wherein the float valve comprises a float (26) connected to a lever (27) and a valve (28).

12. A gravity fed water purification system according to claim 10 wherein the spring-controlled valve comprises a cone (32), an orifice (33) and a spring (34) arranged in mutually coaxial configuration.

13. A chamber (1), for use in a dietary supplement dosing device configured to comprise a dietary supplement dosing cartridge (11), said chamber (1) comprising at least two compartments separated by a weir (2):
(i) a first compartment (4) comprising an inlet port (6) suited to be in fluid communication with a source of feed water where a first opening (8) of said first compartment (4) and connectable to the inlet (20) of the dietary supplement cartridge (11);
(ii) a second compartment (5) comprising an outlet port (10) for dispensing fortified water and a second opening (9) positioned adjacent the first opening on the wall of said second compartment (5) is connectable to the outlet (22) of the dietary supplement cartridge (11); and,
wherein the base of the first compartment is non-horizontal (7) and wherein the weir (2) comprises a notch (3) and the first opening (8) is positioned above the point where the lower end of the slope of the non-horizontal base (7) merges with the wall of the first compartment (4).

14. A method of fortifying feed water using the dietary supplement dosing device according to any one of claims 1 to 7 or a gravity fed water purification system according to any one of the claims 8 to 12 or a chamber according to claim 13 having the steps of delivering feed water at a controlled flow rate through the inlet port (6) of the chamber into the first compartment (4); directing the feed water to flow towards the first opening by the non-horizontal base of the first compartment (4); allowing the feed water to flow through the inlet (20) of the dietary supplement cartridge (11) and thereafter entering the port (18) at the base of the container; dissolving a portion of the dietary supplement tablet (15) to provide a dietary supplement solution; exiting the dietary supplement solution through the window on the container wall into the outlet of the dietary supplement cartridge (11); entering the dietary supplement solution through the second opening into the second compartment; allowing any water in the first compartment (4) rising above the lowest point of the notch of the weir (2) to flow into the second compartment to provide overflow water; collecting the overflow water in the second compartment (5); mixing of the dietary supplement solution released from the second opening and the overflow water in the second compartment to provide fortified water; dispensing the fortified water through the outlet port of the second compartment (5).

15. A method as claimed in claim 14 wherein the flow rate of the feed water is 400 to 1200 ml/minute.

## Patentansprüche

1. Dosiervorrichtung für Nahrungsergänzungen, umfassend:
(i) eine Nahrungsergänzungs-Patrone (11), umfassend einen Einlass (20) für Speisewasser, einen Auslass (22) für angereichertes Wasser, einen Behälter (12) zum Umfassen von wenigstens einer wasserauslaugbaren Nahrungsergänzung in fester Form (15), die auf einer Basis (13) aufliegt, die wenigstens einen Anschluss (18) zum Durchlass von Speisewasser und ein geschlossenes oberes Ende (14) aufweist;
(ii) wobei die Nahrungsergänzungs-Patrone (11) mit einer Kammer (1) verbunden ist, die wenigstens zwei Fächer umfasst, die durch einen Damm (2) voneinander getrennt sind;
(iii) ein erstes Fach (4), das einen Einlassanschluss (6) in Fluidkommunikation mit einer Speisewasserquelle umfasst, wobei das erste Fach (4) mit dem Einlass (20) der Nahrungsergänzungs-Patrone (11) verbunden ist;
(iv) ein zweites Fach (5), das einen Auslassanschluss (10) zur Ausgabe von angereichertem Wasser umfasst, wobei das zweite Fach (5) mit dem Auslass (22) der Nahrungsergänzungs-Patrone (11) verbunden ist; und
wobei die Basis des ersten Fachs nicht horizontal (7) ist und wobei der Damm (2) eine Kerbe (3) umfasst.

2. Dosiervorrichtung für Nahrungsergänzungen nach Anspruch 1, wobei der niedrigste Punkt der Kerbe (3) nicht niedriger als die Basis (13) des Behälters (12) zum Umfassen der Nahrungsergänzungs-Tablette (15) ist.

3. Dosiervorrichtung für Nahrungsergänzungen nach einem der Ansprüche 1 oder 2, wobei die nicht horizontale Basis (7) des ersten Faches (4) eine Neigung von 10° bis 50° aufweist.

4. Dosiervorrichtung für Nahrungsergänzungen nach einem der vorhergehenden Ansprüche, wobei die Kerbe (3) eine V-förmige Kerbe ist.

5. Dosiervorrichtung für Nahrungsergänzungen nach einem der vorhergehenden Ansprüche, wobei der Behälter (12) wenigstens eine wasserauslaugbare Nahrungsergänzung in fester Form (15) umfasst, die auf der Basis (13) aufliegt.

6. Dosiervorrichtung für Nahrungsergänzungen nach Anspruch 5, wobei der Behälter (12) eine Vielzahl von gestapelten Nahrungsergänzungs-Tabletten (15) aufweist.

7. Dosiervorrichtung für Nahrungsergänzungen nach Anspruch 5 oder 6, wobei die Nahrungsergänzung aus einem Vitamin, einem Mineralstoff, einem Elektrolyten, einem Aroma oder einem Nährstoff ausgewählt ist.

8. Schwerkraftgespeistes Wasserreinigungssystem, umfassend die Dosiervorrichtung für Nahrungsergänzungen nach einem der vorhergehenden Ansprüche, wobei die Vorrichtung mit einem Auslasshahn (23) eines schwerkraftgespeisten Wasserreinigungssystems verbunden ist, umfassend eine Filtriereinheit, die dafür eingerichtet ist, partikelförmiges Material zu filtern, und eine Einheit zur chemischen Reinigung, enthaltend ein chemisches Reinigungsmittel, wobei die Einheit zur chemischen Reinigung in einer abgedichteten Kammer untergebracht ist und in Fluidkommunikation mit der Filtriereinheit steht, so dass das durch die Filtriereinheit behandelte Wasser anschließend mittels Schwerkraft in die Einheit zur chemischen Reinigung eingespeist wird und während eines vorbestimmten Zeitraums darin gehalten wird, wonach das Wasser das System über ein Fangmittel verlässt, das dafür eingerichtet ist, das ausgewaschene chemische Reinigungsmittel rückzugewinnen.

9. Schwerkraftgespeistes Wasserreinigungssystem nach Anspruch 8, umfassend ein Flusssteuerungsmittel (24), das stromaufwärts von dem Einlassanschluss (6) und in Fluidkommunikation mit dem Einlassanschluss positioniert ist.

10. Schwerkraftgespeistes Wasserreinigungssystem nach Anspruch 9, wobei das Flusssteuerungsmittel (24) aus einem Schwimmerventil oder einem federgesteuerten Ventil ausgewählt ist.

11. Schwerkraftgespeistes Wasserreinigungssystem nach Anspruch 10, wobei das Schwimmerventil einen Schwimmer (26) umfasst, der mit einem Hebel (27) und einem Ventil (28) verbunden ist.

12. Schwerkraftgespeistes Wasserreinigungssystem nach Anspruch 10, wobei das federgesteuerte Ventil einen Kegel (32), eine Mündung (33) und eine Feder (34) umfasst, die in einer zueinander koaxialen Konfiguration angeordnet sind.

13. Kammer (1) zur Verwendung in einer Dosiervorrichtung für Nahrungsergänzungen, die dafür ausgelegt ist, eine Nahrungsergänzungs-Dosierpatrone (11) zu umfassen, wobei die Kammer (1) wenigstens zwei Fächer umfasst, die durch einen Damm (2) voneinander getrennt sind:
(i) ein erstes Fach (4), umfassend einen Einlassanschluss (6), der dafür geeignet ist, in Fluidkommunikation mit einer Speisewasserquelle zu stehen, wobei eine erste Öffnung (8) des ersten Faches (4) mit dem Einlass (20) der Nahrungsergänzungs-Patrone (11) verbindbar ist;
(ii) ein zweites Fach (5), umfassend einen Auslassanschluss (10) zur Abgabe von angereichertem Wasser, wobei eine zweite Öffnung (9), die angrenzend an die erste Öffnung in der Wand des zweiten Faches (5) angeordnet ist, mit dem Auslass (22) der Nahrungsergänzungs-Patrone (11) verbindbar ist; und
wobei die Basis des ersten Faches nicht horizontal (7) ist und wobei der Damm (2) eine Kerbe (3) umfasst, und wobei die erste Öffnung (8) über dem Punkt positioniert ist, an dem sich das untere Ende der Neigung der nicht horizontalen Basis (7) mit der Wand des ersten Fachs (4) vereinigt.

14. Verfahren zum Anreichern von Speisewasser mithilfe der Dosiervorrichtung für Nahrungsergänzungen nach einem der Ansprüche 1 bis 7 oder eines schwerkraftgespeisten Wasserreinigungssystems nach einem der Ansprüche 8 bis 12 oder einer Kammer nach Anspruch 13, das die folgenden Schritte aufweist: Ausgeben von Speisewasser mit einem gesteuerten Durchsatz durch den Einlassanschluss (6) der Kammer in das erste Fach (4); Richten des Speisewassers, so dass es durch die nicht horizontale Basis des ersten Fachs (4) zu der ersten Öffnung fließt; Erlauben, dass das Speisewasser durch den Einlass (20) der Nahrungsergänzungs-Patrone (11) fließt und anschließend in den Anschluss (18) in der Basis des Behälters eintritt; Auflösen eines Teils der Nahrungsergänzungs-Tablette (15), um eine Nahrungsergänzungs-Lösung bereitzustellen; Auslassen der Nahrungsergänzungs-Lösung durch das Fenster in der Behälterwand in den Auslass der Nahrungsergänzungs-Patrone (11); Einlassen der Nahrungsergänzungs-Lösung durch die zweite Öffnung in das zweite Fach; Erlauben, dass jegliches Wasser in dem ersten Fach (4), das über den niedrigsten Punkt der Kerbe des Damms (2) ansteigt, in das zweite Fach fließt, um Überlaufwasser bereitzustellen; Sammeln des Überlaufwassers im zweiten Fach (5); Mischen der aus der zweiten Öffnung freigesetzten Nahrungsergänzungs-Lösung und des Überlaufwassers im zweiten Fach, um angereichertes Wasser bereitzustellen; Ausgeben des angereicherten Wassers durch den Auslassanschluss dem zweiten Fach (5).

15. Verfahren nach Anspruch 14, wobei der Durchsatz des Speisewassers 400 bis 1200 ml/Minute beträgt.

## Revendications

1. Dispositif de dosage de complément alimentaire comprenant :
(i) une cartouche de complément alimentaire (11) comprenant une entrée (20) pour de l'eau d'alimentation, une sortie (22) pour de l'eau fortifiée, un récipient (12) pour comprendre au moins un complément alimentaire lessivable par l'eau dans une forme solide (15) restant sur une base (13) ayant au moins un orifice (18) pour le passage d'eau d'alimentation et une extrémité supérieure fermée (14) ;
(ii) ladite cartouche de complément alimentaire (11) est connectée à une chambre (1) comprenant au moins deux compartiments séparés par un déversoir (2) ;
(iii) un premier compartiment (4) comprenant un orifice d'entrée (6) en communication fluide avec une source d'eau d'alimentation où ledit premier compartiment (4) est connecté à l'entrée (20) de la cartouche de complément alimentaire (11) ;
(iv) un second compartiment (5) comprenant un orifice de sortie (10) pour distribuer de l'eau fortifiée et ledit second compartiment (5) est connecté à la sortie (22) de la cartouche de complément alimentaire (11) ; et,
dans lequel la base du premier compartiment est non-horizontale (7) et dans lequel le déversoir (2) comprend une encoche (3).

2. Dispositif de dosage de complément alimentaire selon la revendication 1 dans lequel le point le plus bas de l'encoche (3) n'est pas inférieur à la base (13) du récipient (12) pour comprendre le comprimé de complément alimentaire (15).

3. Dispositif de dosage de complément alimentaire selon l'une quelconque des revendications 1 ou 2 dans lequel la base non-horizontale (7) du premier compartiment (4) présente une inclinaison de 10° à 50°.

4. Dispositif de dosage de complément alimentaire selon l'une quelconque des revendications précédentes dans lequel l'encoche (3) est une encoche en forme de V.

5. Dispositif de dosage de complément alimentaire selon l'une quelconque des revendications précédentes, dans lequel le récipient (12) comprend au moins un complément alimentaire lessivable à l'eau dans une forme solide (15) restant sur la base (13).

6. Dispositif de dosage de complément alimentaire selon la revendication 5 dans lequel le récipient (12) présente plusieurs comprimés de compléments alimentaires empilés (15).

7. Dispositif de dosage de complément alimentaire selon la revendication 5 ou 6, dans lequel le complément alimentaire est choisi parmi une vitamine, un minéral, un électrolyte, un arôme ou un nutriment.

8. Système de purification d'eau introduite par gravité comprenant le dispositif de dosage de complément alimentaire selon l'une quelconque des revendications précédentes dans lequel ledit dispositif est connecté à un robinet de sortie (23) d'un système de purification d'eau introduite par gravité comprenant une unité de filtration adaptée pour filtrer du matériau particulaire, et une unité de purification chimique contenant un agent purifiant chimique, dans lequel l'unité de purification chimique est logée dans une chambre scellée et est en communication fluide avec l'unité de filtration de sorte que de l'eau traitée par l'unité de filtration est ensuite introduite par gravité dans l'unité de purification chimique et retenue dans celle-ci sur une période prédéterminée, après quoi l'eau sort du système via un moyen d'élimination qui est adapté pour récupérer l'agent purifiant chimique lessivé.

9. Système de purification d'eau introduite par gravité selon la revendication 8 comprenant un moyen de contrôle de débit (24) disposé en amont de l'orifice d'entrée (6) et en communication fluide avec ledit orifice d'entrée.

10. Système de purification d'eau introduite par gravité selon la revendication 9 dans lequel le moyen de contrôle de débit (24) est choisi parmi une vanne à flotteur ou une vanne contrôlée par un ressort.

11. Système de purification d'eau introduite par gravité selon la revendication 10 dans lequel la vanne à flotteur comprend un flotteur (26) connecté à un levier (27) et une vanne (28).

12. Système de purification d'eau introduite par gravité selon la revendication 10 dans lequel la vanne contrôlée par un ressort comprend un cône (32), un orifice (33) et un ressort (34) disposés dans une configuration mutuellement coaxiale.

13. Chambre (1), pour une utilisation dans un dispositif de dosage de complément alimentaire configurée pour comprendre une cartouche de dosage de complément alimentaire (11), ladite chambre (1) comprenant au moins deux compartiments séparés par un déversoir (2) :
(i) un premier compartiment (4) comprenant un orifice d'entrée (6) approprié pour être en communication fluide avec une source d'eau d'alimentation où une première ouverture (8) dudit premier compartiment (4) et pouvant être connectée à l'entrée (20) de la cartouche de complément alimentaire (11) ;
(ii) un second compartiment (5) comprenant un orifice de sortie (10) pour distribuer de l'eau fortifiée et une seconde ouverture (9) disposée à côté de la première ouverture sur la paroi dudit second compartiment (5) peut être connectée à la sortie (22) de la cartouche de complément alimentaire (11) ; et,
dans laquelle la base du premier compartiment est non-horizontale (7) et dans laquelle le déversoir (2) comprend une encoche (3) et la première ouverture (8) est disposée au-dessus du point où l'extrémité inférieure de la pente de la base non-horizontale (7) fusionne avec la paroi du premier compartiment (4).

14. Procédé de fortification d'eau d'alimentation utilisant le dispositif de dosage de complément alimentaire selon l'une quelconque des revendications 1 à 7 ou un système de purification d'eau introduite par gravité selon l'une quelconque des revendications 8 à 12 ou une chambre selon la revendication 13 présentant les étapes de fourniture d'eau d'alimentation à un débit contrôlé à travers l'orifice d'entrée (6) de la chambre dans le premier compartiment (4) ; de direction de l'eau d'alimentation pour qu'elle s'écoule vers la première ouverture par la base non-horizontale du premier compartiment (4) ; laisser l'eau d'alimentation s'écouler à travers l'entrée (20) de la cartouche de complément alimentaire (11) et entrer après cela dans l'orifice (18) à la base du récipient ; la dissolution d'une portion du comprimé de complément alimentaire (15) pour fournir une solution de complément alimentaire ; la sortie de la solution de complément alimentaire à travers la fenêtre sur la paroi de récipient dans la sortie de la cartouche de complément alimentaire (11) ; l'entrée de la solution de complément alimentaire à travers la seconde ouverture dans le second compartiment ; laisser toute eau dans le premier compartiment (4) s'élever au-dessus du point le plus bas de l'encoche du déversoir (2) pour s'écouler dans le second compartiment pour fournir de l'eau de débordement ; le recueil de l'eau de débordement dans le second compartiment (5) ; le mélange de la solution de complément alimentaire délivré par la seconde ouverture et de l'eau de débordement dans le second compartiment pour fournir de l'eau fortifiée ; la distribution de l'eau fortifiée par l'orifice de sortie du second compartiment (5).

15. Procédé selon la revendication 14 dans lequel le débit de l'eau d'alimentation est de 400 à 1 200 ml/minute.
